# EUROPÄISCHE PATENTSCHRIFT

(11) **EP 0 575 656 B1**
(45) Veröffentlichungstag und Bekanntmachung des Hinweises auf die Patenterteilung: **14.11.2001**
(21) Anmeldenummer: 92110784.3
(22) Anmeldetag: 26.06.1992
(51) Int. Cl.: H04L 12/56

(54) **Verfahren zur Behandlung der im Kopfteil von im asynchronen Transfermodus übertragenen Nachrichtenzellen enthaltenden Informationen**
Procedure to handle the information contained in the header of ATM cells
Méthode pour manipuler l'en-tête d'une cellule ATM

(43) Veröffentlichungstag der Anmeldung: 29.12.1993
(73) Patentinhaber: SIEMENS AKTIENGESELLSCHAFT, 80333 München (DE)
(72) Erfinder: Jugel, Alfred, W-8192 Geretsried (DE)

(56) Entgegenhaltungen:
- EP-A- 0 436 069
- EP-A- 0 446 586
- PATENT ABSTRACTS OF JAPAN vol. 14, no. 391 (E-968)23. August 1990 & JP-A-21 43 639

## Beschreibung

Die Erfindung betrifft ein Verfahren zur Behandlung der im Kopfteil von im asynchronen Transfermodus übertragenen Nachrichtenzellen (ATM-Zellen) im Zuge der Durchschaltung durch das Koppelnetz einer ATM-Vermittlungsstelle gemäß dem Oberbegriff des Patentanspruchs 1.

Bei einer solchen Behandlung werden ein der Verkehrswegekennzeichnung dienender Bestandteil VPI und ein der Verbindungskennzeichnung dienender Bestandteil VCI der Kopfteilinformation der ankommenden ATM-Zellen in entsprechende Bestandteile von Kopfteilinformationen abgehender ATM-Zellen umgewandelt. Innerhalb der Kopfteile umfassen die erwähnten Bestandteile VPI und VCI 28 Bit, womit sich 256 Millionen Kombinationsmöglichkeiten ergeben. Um Schwierigkeiten zu vermeiden, die aus einer derartig hohen Anzahl von Bitkombinationen resultieren, wird vor der Durchführung der erwähnten Umwandlung von Bestandteilen VPI/VCI ankommender ATM-Zellen in entsprechende Bestandteile abgehender ATM-Zellen mit Hilfe eines Assoziativspeichers eine Einschränkung der Anzahl von Kombinationsmöglichkeiten z.B. auf 4000 entsprechend 12 Bit für die genannten Bestandteile vorgenommen und erst auf der Basis dieser eingeschränkten Bitanzahl dann die Umwandlung durchgeführt.

Für die Durchschaltung durch eine ATM-Vermittlungsstelle wird der erwähnte Kopfteil der ATM-Zellen, der auch als externer Kopfteil bezeichnet wird, durch einen internen Kopfteil ergänzt, der u.a. sogenannte Routing-Informationen zur Wegebestimmung durch das Koppelfeld und eine Zellenfolgenummer enthält.

Diese erwähnten Vorgänge der Kombinationsreduktion, der Umwandlung, der Hinzufügung des internen Kopfteils und der nachfolgenden Wiederherstellung der ursprünglichen Bitanzahl für die erwähnten Kopfteilinformationen VPI und VC wurden bisher in Einrichtungen durchgeführt, die der vermittlungsstelleneingangsseitigen Peripherie angehören.

Der eingangs genannte Stand der Technik wird auch in der europäischen Patentanmeldung EP-A2-0 446 586 beschrieben. Demnach wird an jedem Ausgang des Koppelnetzes eine Ausgangseinheit nachgeschaltet, die die richtige Reihenfolge der ATM-Zellen gewährleistet.

Um die Verkehrslast im ATM-Koppelnetz insbesondere bei Nutzung der flexiblen Bandbreitenzuordnung möglichst gleichmäßig zu verteilen und damit Überlastungen einzelner interner Wege zu vermeiden, werden für die Durchschaltung von zu ein und derselben Verbindung gehörenden ATM-Zellen sämtliche von einem bestimmten Koppelnetzeingang zu einem bestimmten Koppelnetzausgang führenden Wege ausgenutzt, wozu die entsprechenden Routinginformationen zyklisch vertauscht in die internen Kopfteile eingefügt werden, ein Verfahren das auch als sogenanntes Multipathing bekannt ist. Wegen der unterschiedlichen Wege kommt es allerdings hierbei zu Laufzeitdifferenzen, so daß unter Umständen die ursprüngliche Zellenreihenfolge verloren geht, weswegen am Koppelnetzausgang unter Verwendung der erwähnten Zellennummer im internen Kopfteil eine Wiederherstellung der ursprünglichen Zellenreihenfolge vorgenommen werden muß.

Da dieses sogenannte "Resequencing" individuell für jede Verbindung, d.h. für jede mögliche VPI/VCI-Kombination durchgeführt werden muß, würden sich, sofern es auf der Basis der vorerwähnten 28 Bits für die beiden Bestandteile VPI und VCI der externen Kopfteile vorgenommen würde, entsprechende technische Schwierigkeiten ergeben wie bei der Umwandlung von VPI/VCI-Kombinationen ankommender ATM-Zellen in entsprechende Kombinationen abgehender ATM-Zellen.

Die Aufgabe der Erfindung besteht darin, ein Verfahren anzugeben, durch das solche technischen Schwierigkeiten vermieden werden.

Diese Aufgabe wird durch die im Kennzeichen der Erfindung angegebenen Merkmale gelöst.

Dementsprechend werden die Vorgänge der Reduzierurung der Anzahl der VPI/VCI-Kombinationen, der Umwandlung von VPI/VCI-Kombinationen ankommender ATM-Zellen in VPI/VCI-Kombinationen abgehender ATM-Zellen, der Wiederherstellung der ursprünglichen Anzahl von VPI/VCI-Kombinationsmöglichkeiten, der Bildung der zyklisch veränderten Routing-Informationen des internen Zellenkopfes und der Wiederherstellung der ggf. verlorenen Zellenreihenfolge auf der eingangsseitigen und der ausgangsseitigen Peripherie einer ATM-Vermittlungsstelle zugehörige Einrichtungen bzw. auf eingangsseitige und ausgangsseitige zur ATM-Vermittlungsstelle gehörende Einrichtungen in bestimmter Weise verteilt.

Nachstehend wird die Erfindung anhand eines Ausführungsbeispiels unter Bezugnahme auf eine Zeichnung näher erläutert.

In der Zeichnung zeigen:
- FIG 1: das Format einer externen ATM-Zelle,
- FIG 2: das Format einer internen ATM-Zelle,
- FIG 3: das Blockschaltbild der Struktur einer ATM-Vermittlungsstelle samt peripheren Einrichtungen, in der das erfindungsgemäße Verfahren abgewickelt wird.

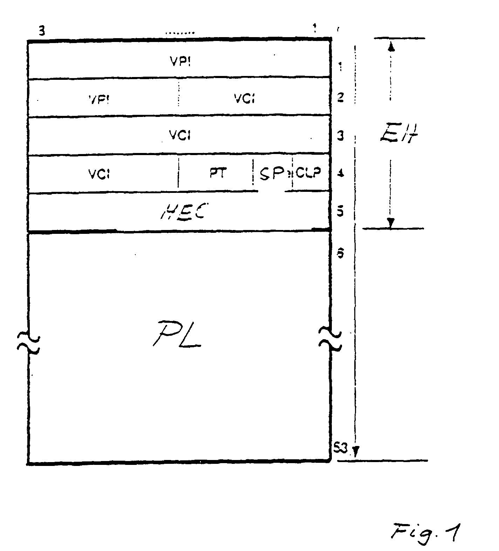

Wie die FIG 1 zeigt, besteht eine externe ATM-Zelle aus 53 jeweils 8 Bit umfassenden Bytes, sogenannten Oktetts.
Der externe Kopfteil EH (External Header) dieser Zelle nimmt 5 solcher Oktetts ein, von denen 3 und ein halbes in der dargestellten Verteilung Bestandteile VPI zur Verkehrswegkennzeichnung und Bestandteile VCI zur Verbindungskennzeichnung aufnehmen, die damit insgesamt 28 Bit umfassen. Bestandteile des externen Kopfteils EH sind ferner ein 4 Bit umfassender Bestandteil PT (Payload Type), der die Art der Informationen im Nutzteil PL, dem restlichen Teil der ATM-Zelle bezeichnet, zwei unausgenutzte Bit, ein 2 Bit umfassender Teil CLP, der eine Priorität bezeichnet, die im Falle der Möglichkeit eines Zellenverlusts eine Rolle spielt, sowie ein Oktett HEC (Header Error Control), das ein Codekontrollwort für den externen Zellenkopf EH darstellt.

Der schon erwähnte Nutzteil PL der externen ATM-Zelle umfaßt 48 Oktetts. Ihm, folgt ein Oktett FCS (Froame Check Sequence), das das Zellenende kennzeichnet.

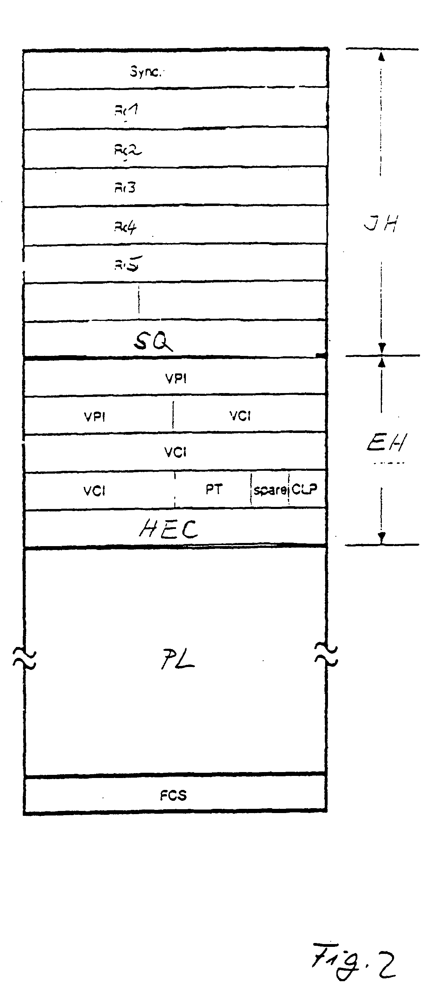

Wie die FIG 2 zeigt, ist eine interne ATM-Zelle, wie sie durch das Koppelnetz durchgeschaltet wird, gegenüber der externen ATM-Zelle um einen internen Zellenkopf IH erweitert.

Dieser interne Zellenkopf, umfaßt 8 Oktetts und enthält dabei im wesentlichen ein Synchronisationsoktett Sync, eine Reihe von sogenannten Routing-Informationen R1 bis R5, die den Weg durch das Koppelfeld bestimmen, sowie eine Reihenfolgenummer SQN (Sequence Number).

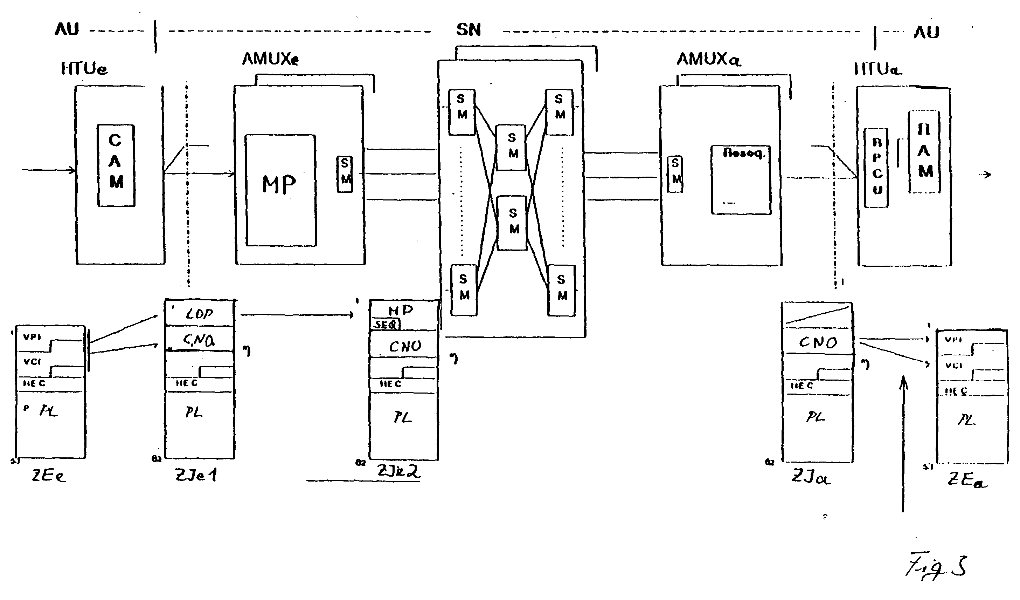

Das Blockschaltbild gemäß FIG 3 zeigt als eingangsseitige zur Peripherie gehörende Einrichtung eines ATM-Koppelnetzes SN, eine Einrichtung HTUe, ferner als Bestandteil des Koppelnetzes eine gedoppelte eingangsseitige Einrichtung AMUXe, die eigentliche aus zwei Koppelnetzebenen mit jeweils mehrstufigen Anordnungen aus Koppelnetzmodulen SM bestehende Koppelanordnung, eine gedoppelte ausgangsseitige Einrichtung AMUXa des Koppelnetzes und eine zur ausgangsseitigen Peripherie AU des Koppelnetzes gehörende Einrichtung HTUa.

Die Aufgabe der eingangsseitigen peripheren Einrichtung HTUe besteht einerseits in der Einschränkung der möglichen Kombinationen der Kopfteilbestandteile VPI und VCI ankommender ATM-Zellen ZEe, siehe die Darstellung im unteren Teil der FIG 3, die derjenigen in FIG 1 entspricht, andererseits in der Umwertung solcher VPI/VCI-Kombinationen. Während jedoch bisher an dieser Stelle durch die Umwertung gleich VPI/VCI-Kombinationen in der Form erzeugt worden sind, in der sie nach Durchschaltung durch das Koppelnetz als Bestandteil externer ATM-Zellen weiterübertragen werden sollten, wird entsprechend dem erfindungsgemäßen Verfahren an dieser Stelle zunächst lediglich eine Umwertung der VPI/VCI-Kombinationen ankommender externer ATM-Zellen in eine ausgangsbezogene Verbindungsnummer CNO (Conection Number) und in eine logische Koppelnetzausgangsnummer LOP (Logical Output Port) vorgenommen, womit eine interne Zelle ZIel (s. FIG 3 unten) entsteht, die in Abweichung vom Aufbau der internen Zelle gemäß FIG. 2 noch keine differenzierten Wegeinformationen für den Weg durch das Koppelnetz enthält. Die Gesamzahl der Oktetts der Zellen ZIel ist aus Kompatibilitätsgründen dieselbe wie bei der internen ATM-Zelle gemäß FIG 2. Die ausgangsbezogene Verbindungsnummer CNO, die wie die externen VPI/VCI-Kombinationen eindeutig eine bestimmte Verbindung kennzeichnet, weist hier gegenüber 28 Bits solcher VPI/VCI-Kombinationen lediglich noch beispielsweise 12 Bit auf, was jedoch ausreicht, um jeweils sämtliche zu demselben Koppelnetzausgang durchzuschaltende Verbindungen unterscheiden zu können.

In der gedoppelten koppelfeldeingangsseitigen Einrichtung AMUXe, einem ATM-Multiplexer, wird nunmehr eine Umwandlung der logischen Koppelnetzausgangsnummer LOP in Routinginformationen, also in einen physikalischen Weg durch das Koppelnetz kennzeichnende Informationen vorgenommen. Es werden dabei aus den vorstehend genannten Gründen zyklisch wechselnd sämtliche möglichen Wege zwischen einem bestimmten Eingang und einem bestimmten Ausgang betreffenden Routinginformationen erzeugt. Diese Art von Umwandlung wird in der erwähnten Einrichtung AMUXe durch eine Funktionseinheit MP bewirkt. Entsprechend ist auch der betreffende Bestandteil des internen Kopfteils der internen ATM-Zelle ZIe2 mit MP bezeichnet.Der interne Kopfteil MP umfaßt auch eine Reihenfolgenummer SQ. In dieser Form werden die ATM-Zellen durch das Koppelnetz durchgeschaltet.

In der gedoppelten ausgangsseitigen Einrichtung AMUXa, bzw. deren Teil Reseq des Koppelnetzes, findet dann nach Durchschaltung der internen ATM-Zellen unter Auswertung der ausgangsbezogenen Verbindungsnummer CNO, die, wie angegeben, auf der Basis von 12 Bits lediglich 4000 unterschiedliche Werte annehmen kann, und unter Auswertung der zugehörigen Reihenfolgenummer SQ nach Koppelnetzscheiben getrennt, eine Wiederherstellung der ggf. verlorengegangenen Zellenreihenfolge der zu der betreffenden neutralen ausgangsbezogenen Verbindungsnummer gehörenden ATM-Zellen statt. Der Teil MP des internen Zellenkopfes der ATM-Zellen wird an dieser Stelle beseitigt, so daß ein Zellenformat gemäß ZIa vorliegt, s.Fig.3 unten.

In der zur ausgangsseitigen Peripherie gehörenden Einrichtung HTUa werden anhand der ausgangsbezogenen Verbindungsnummer CNO im Kopfteil der ATM-Zelle mit dem Format gemäß ZIa und anhand der erwähnten Zellennummer zusammengehörende, über die beiden Koppelnetzscheiben geführte Zellenfolgen wieder auf einer Leitung vereinigt. Es folgt ferner eine Umwertung der ausgangsbezogenen Verbindungsnummer in eine VPI/VCI-Kombination für den externen Teil EH einer abgehenden ATM-Zelle, siehe ZEa, die wieder ein Format entsprechend der FIG 1 hat.

Das sogenannte Resequenzing wird beim erfindungsgemäßen Verfahren, wie angegeben, auf der Basis der eingeschränkten Bitkombinationen durchgeführt, womit es es technisch erst möglich wird.

Ferner ist eine Trennung von verbindungsbezogenen Daten, die in der Peripherie gehalten werden und der den physikalischen Aufbau des Koppelnetzes betreffenden Daten gewährleistet, die ausschließlich dort behandelt werden.

Beim Durchlaufen der verschiedenen Funktionseinheiten wie HTUe, HTUa, Koppelfeldmodule SM und Multiplexer/Demultiplexer AMUXe, AMUXa werden Teile der internen und externen Kopfteilbereiche mehrfach unterschiedlich belegt, so daß die im Zuge der Durchschaltung vorliegende Kopfteil/Nutzteilrelation günstig und damit das Koppelnetz effektiv genützt ist.

## Patentansprüche

1. Verfahren zur Behandlung der im Kopfteil von im asynchronen Transfermodus übertragenen Nachrichtenzellen (ATM)-Zellen enthaltenen Informationen im Zuge der Durchschaltung der ATM-Zellen durch das Koppelnetz (SN) einer ATM-Vermittlungsstelle, demgemäß die Umwandlung der der Verkehrswegekennzeichnung und der Verbindungskennzeichnung dienenden Bestandteile der Kopfteilinformationen ankommender ATM-Zellen auf der Basis einer reduzierten Bitanzahl in Bestandteile von Kopfteilen abgehender ATM-Zellen erfolgt,
**dadurch gekennzeichnet,**
**daß** bei einer Durchschaltung zur logischen Verbindung gehörender ATM-Zellen auf unterschiedlichen Wegen durch das Koppelnetz (SN) der Vermittlungsstelle und ausgangsseitiger Wiederherstellung der dabei ggf. verlorengegangenen ursprünglichen Reihenfolge
a) in einer zur eingangsseitigen Peripherie der Vermittlungsstelle gehörenden Einrichtung (HTUe) die der Verkehrskennzeichnung und der Verbindungskennzeichnung dienenden Bestandteile (VPI/VCI) der Kopfteilinformationen auf der genannten Basis der eingeschränkten Bitanzahl zunächst jeweils in eine neutrale ausgangsbezogene Verbindungsnummer (CNO) und in eine logische Koppelfeldausgangsnummer (LOP) umgewertet werden,
b) in einer zum Koppelnetz (SN) der Vermittlungsstelle gehörenden eingangsseitigen Einrichtung (AMUXe) eine Umwertung jeder logischen Koppelnetzausgangsnummer (LOP) jeweils in eine aus einer Mehrzahl von Wegeinformationen (MP) erfolgt, die die unterschiedlichen, zum selben betreffenden Koppelnetzausgang führenden Wege kennzeichnen,
c) die ggf. erforderliche Wiederherstellung der Zellenreihenfolge der durch dieselbe neutrale Verbindungsnummer (CNO) gekennzeichneten ATM-Zellen in einer ausgangsseitigen, zum Koppelnetz gehörenden Einrichtung (AMUXa) anhand der ausgangsbezogenen Verbindungsnummer (CNO) erfolgt.

## Claims

1. Method for handling information contained in the header part of message cells (ATM cells) transmitted using the asynchronous transfer mode, in the course of passing the ATM cells through the switching network (SN) of an ATM exchange, in accordance with which those components of the header part information of incoming ATM cells which are used for routing identification and for connection identification are converted on the basis of a reduced number of bits into components of header parts of outgoing ATM cells,
**characterized**
**in that**, for logic linking of associated ATM cells on different routes, in the process of being passed through the switching network (SN) of the exchange, and for reproducing the original sequence, which may have been lost during the process, on the output side:
a) those components (VPI/VCI) of the header part information which are used for traffic identification and for connection identification are initially each converted on the said basis of the limited number of bits in a device (HTUe) which is one of the input-side peripherals in the exchange, into a neutral output-related connection number (CNO) and into a logic switching network output number (LOP),
b) each logic switching network output number (LOP) is in each case converted in an input-side device (AMUXe), which is part of the switching network (SN) of the exchange, into one of a number of routing information items (MP) which identify the different routes leading to the same relevant switching network output,
c) the reproduction of the cell sequence which may be required for those ATM cells which are identified by the same neutral connection number (CNO) in an output-side device (AMUXa) which is part of the switching network is carried out using the output-related connection number (CNO).

## Revendications

1. Procédé pour manipuler les informations contenues dans l'en-tête de cellules (ATM) contenant des messages transférés en mode asynchrone au cours du transfert des cellules ATM à travers le réseau commuté (SN) d'un centre de commutation ATM, selon lequel on procède à la conversion des composantes des informations contenues dans l'en-tête des cellules ATM arrivant, lesquelles composantes servent à caractériser le trajet de transmission et la connexion, en composantes des en-têtes des cellules ATM partant, conversion qui s'effectue sur la base d'un nombre de bits réduit, **caractérisé en ce que**
lors d'un transfert de cellules ATM appartenant à la liaison logique sur des trajets différents à travers le réseau commuté (SN) du centre de commutation et lors du rétablissement, sur le côté de la sortie, de l'ordre initial perdu, le cas échéant, pendant le transfert,
a) les composantes (VPI/VCI) des informations de l'en-tête, qui servent à la caractérisation du trajet de transmission et à la caractérisation de la connexion, sont d'abord traduites respectivement, sur la base citée du nombre de bits restreint, en un numéro de connexion neutre (CNO) spécifique à la sortie et en un numéro de sortie logique (LOP) de la matrice de commutation dans un dispositif (HTUe) appartenant au matériel périphérique situé sur le côté d'entrée du centre de commutation,
b) on assiste, dans un dispositif (AMUXe) appartenant au réseau commuté (SN) du centre de commutation et situé sur le côté d'entrée, à une traduction de chaque numéro de sortie logique (LOP) du réseau commuté, respectivement, en une composante (MP) formée d'une pluralité d'informations sur les trajets, qui caractérisent les différents trajets menant à la même sortie concernée du réseau commuté,
c) le rétablissement éventuellement nécessaire de l'ordre des cellules ATM **caractérisées par** ce même numéro de connexion neutre (CNO) s'effectue dans un dispositif (AMUXa) appartenant au réseau commuté et situé sur le côté de sortie, en s'appuyant sur le numéro de connexion (CNO) spécifique à la sortie.
